# EUROPÄISCHE PATENTSCHRIFT

(11) **EP 3 544 166 B1**
(45) Veröffentlichungstag und Bekanntmachung des Hinweises auf die Patenterteilung: **21.09.2022**
(21) Anmeldenummer: 18163249.8
(22) Anmeldetag: 22.03.2018
(51) Int. Cl.: H02M 3/335, G08C 17/06

(54) **HILFSVERSORGUNG FÜR EINE STROMVERSORGUNG**
AUXILIARY SUPPLY FOR A POWER SUPPLY
ALIMENTATION ÉLECTRIQUE SECONDAIRE POUR UNE ALIMENTATION ÉLECTRIQUE

(43) Veröffentlichungstag der Anmeldung: 25.09.2019
(73) Patentinhaber: Siemens Aktiengesellschaft, 80333 München (DE)
(72) Erfinder: Reschenauer, Stefan, 2191 Atzelsdorf (AT)
(74) Vertreter: Maier, Daniel Oliver

(56) Entgegenhaltungen:
- EP-A2- 0 260 221
- WO-A2-2014/032066
- DE-A1- 3 735 470

## Beschreibung

### Technisches Gebiet

Die gegenständliche Erfindung betrifft eine Hilfsversorgung für eine Stromversorgung, welche zumindest einen Transformator mit einer Primärseite und einer Sekundärseite aufweist. Von der Hilfsversorgung wird eine vom jeweiligen Betriebszustand unabhängige Spannungsversorgung für die Sekundärseite zur Verfügung gestellt. Die Hilfsversorgung umfasst dabei zumindest einen primärseitig angeordneten Frequenzgenerator, eine sekundärseitig angeordnete Gleichrichtereinheit für eine sekundärseitige Versorgungsspannung sowie eine erste und eine zweite Potentialtrennung, welche zwischen Primär- und Sekundärseite angeordnet sind.

### Stand der Technik

Stromversorgungen sind üblicherweise eigenständige Geräte oder eine Baugruppe, welche zur Energieversorgung Verbrauchern - d.h. von Geräten und/oder Baugruppen - eingesetzt werden. Diese Verbraucher benötigen dabei häufig eine andere Spannung oder einen anderen Strom als von einem versorgenden Stromnetz oder einer versorgenden Strom-/Spannungsquelle bereitgestellt wird. Von der Stromversorgung wird eine meist unstabilisierte, aus der Strom-/Spannungsquelle stammende Gleich- oder Wechselspannung in eine meist konstante und häufig vorgegebene Ausgangsspannung umgewandelt. Dazu werden üblicherweise Spannungswandler eingesetzt, welche einen Leistungsübertrager bzw. einen Transformator aufweisen. Als Spannungswandler werden z.B. Flusswandler, Sperrwandler oder Resonanzwandler verwendet.

Mit Hilfe des Transformators wird die Energie von einer Primärseite der Stromversorgung auf eine Sekundärseite der Stromversorgung übertragen. Die Primärseite der Stromversorgung ist dabei üblicherweise mit dem Stromnetz oder der Strom-/Spannungsquelle verbunden. Auf der Sekundärseite wird üblicherweise die für den jeweiligen Verbraucher benötigte Ausgangsspannung zur Verfügung gestellt.

Bei als Schaltnetzteilen ausgeführten Stromversorgungen bzw. getakteten Stromversorgungen hängt üblicherweise ein übertragener Momentanleistungswert direkt von einem Tastverhältnis ab - d.h. vom Verhältnis einer Ein- und Ausschaltzeit der eingesetzten Schaltelemente, welche üblicherweise von einer Steuereinrichtung geschaltet werden. Für die interne Versorgung der jeweiligen Steuereinrichtungen bzw. der gesamten Ansteuerung werden daher von Stromversorgungen - insbesondere von getakteten Stromversorgungen - so genannte Hilfsversorgungen verwendet.

Da Stromversorgungen immer billiger produziert werden müssen, werden beispielsweise häufig Hilfsversorgungen auf der Sekundärseite eingespart, da sekundärseitig ohnehin die Ausgangsspannung des Schaltnetzteils zur Verfügung steht. Allerdings kann es bei Stromversorgungen erforderlich sein, eine zusätzliche meist sekundärseitige Steuerelektronik vorzusehen, welche unabhängig von der momentan verfügbaren Ausgangsspannung des Schaltnetzteils mit Energie versorgt werden muss. Weiterhin kann gefordert sein, dass die Stromversorgung eine Anschlussmöglichkeit aufweist, bei welcher durch einen Kurzschluss an einer Signalklemme die Ausgangsspannung abgeschaltet wird. Auch in diesem Fall muss für eine Versorgung von Komponenten wie z.B. einer Steuerelektronik, einer Kontrollleuchte, etc. auf der Sekundärseite des Schaltnetzteils gesorgt werden. Allerdings können auf der Sekundärseite des Transformators befindliche Komponenten nur unter Verwendung aufwändiger Schaltungen weiter versorgt werden, wenn keine Ausgangsspannung des Schaltnetzteils mehr zur Verfügung steht - wie z.B. im Kurzschlussfall, bei Fernausschaltung bzw. im so genannten Standby-Modus.

Aus der bisher unveröffentlichten europäischen Patentanmeldung EP 16202606.6 ist eine Hilfsversorgung für ein Schaltnetzteil mit einem Transformator bzw. Primär- und Sekundärseite bekannt. Von dieser Hilfsversorgung wird eine vom Betriebszustand des Schaltnetzteils unabhängige Spannungsversorgung für sekundärseitig angeordnete Einheiten generiert und eine galvanische Trennungseinheit mit einer Wechselspannung mit vorgegebener Frequenz, insbesondere einer Frequenz aus dem Hochfrequenzbereich wie z.B. aus dem hohen kHz- oder MHz-Bereich, beaufschlagt, welche primärseitig von einem Frequenzgenerator erzeugt wird. Diese Wechselspannung bzw. dieser Wechselstrom kann dann mittels der sekundärseitig angeordneten Gleichrichtereinheit abgegriffen werden und für eine Versorgung von sekundärseitig angeordneten Einheiten wie z.B. Steuerelektronik, Kontrollleuchten, etc. herangezogen werden.

Bei der Hilfsversorgung, welche aus der bisher unveröffentlichten Schrift EP 16202606.6 bekannt ist, sind weiterhin auf der Primärseite zwischen dem Frequenzgenerator und der galvanischen Trenneinheit Vorwiderstände angeordnet, durch deren Einsatz die Hilfsversorgung zusätzlich für eine Übertragung von Informationen bzw. Signalen von der Sekundärseite auf die Primärseite genutzt werden kann. Die galvanische Trenneinheit, welche z.B. als kapazitive Trenneinheit in Form von zwei Kondensatoren ausgeführt sein kann, wird über die Vorwiderstände hochohmig und invers mit der vom Frequenzgenerator erzeugten Hochfrequenz angesteuert. Wird nun der sekundärseitige Ausgang der Hilfsversorgung z.B. mit einer hochohmigen Bürde belastet, so kann dies primärseitig erkannt und entsprechend ausgewertet werden. Das dabei entstehende potentialfreie Signal ist hochohmig mit der Primärseite gekoppelt.

Die in der bisher unveröffentlichten Schrift EP 16202606.6 beschriebene Hilfsversorgung weist allerdings insbesondere bei der Übertragung von Informationen bzw. Signalen von der Sekundärseite auf die Primärseite eine relativ hohe Empfindlichkeit gegenüber Störungen wie z.B. aus dem Bereich elektromagnetischer Verträglichkeit, Hochfrequenz-Schwankungen bzw. Phasenverschiebungen zwischen Primär- und Sekundärseite,

Störungen im Schaltnetzteil, etc., welche eine primärseitige Signalauswertung bzw. ein Messergebnis beeinflussen.

Um die Empfindlichkeit gegenüber Störungen zu reduzieren, können für die Signalauswertung beispielsweise zusätzlich Kondensatoren zur Filterung der Signale eingesetzt werden. Diese Vorgehensweise führt allerdings neben dem Einsatz zusätzlicher Bauteile auf der Primärseite, auch zu einer gewissen Ungenauigkeit bei den Messergebnissen. Diese Ungenauigkeiten müssen dann entweder in Kauf genommen werden oder relativ aufwendig korrigiert werden. Alternativ kann beispielsweise auf der Primärseite ein schnell arbeitendes Auswerte- bzw. Messgerät mit einer hohen Gleichtaktunterdrückung verwendet werden. Dies ist allerdings ebenfalls mit zusätzlichem Aufwand und vor allem mit wesentlich höheren Kosten für das gesamte Schaltnetzteil verbunden. WO2014/032066 offenbart ein Betriebsgerät zur Ansteuerung einer LED-Strecke, wobei eine kapazitive Versorgung während einer Anlaufphase vorgesehen ist.

### Darstellung der Erfindung

Der Erfindung liegt daher die Aufgabe zugrunde, eine Hilfsversorgung der eingangs angeführten Art für eine Stromversorgung anzugeben, durch welche auf einfache und kostensparende Weise eine Verbesserung gegenüber dem Stand der Technik, insbesondere ein geringere Störungsempfindlichkeit vor allem bei hochfrequenten Störungen, erzielt wird.

Diese Aufgabe wird durch eine Hilfsversorgung der eingangs angegebenen Art mit den Merkmalen des unabhängigen Patentanspruchs gelöst. Vorteilhafte Ausführungsformen der vorliegenden Erfindung sind in den abhängigen Ansprüchen beschrieben. Erfindungsgemäß erfolgt die Lösung der Aufgabe durch eine Hilfsversorgung für eine Stromversorgung, welche zumindest einen Transformator mit einer Primärseite und einer Sekundärseite aufweist. Die Hilfsversorgung stellt dabei eine vom Betriebszustand der Stromversorgung unabhängige Spannungsversorgung auf der Sekundärseite der Stromversorgung zur Verfügung und besteht zumindest aus einem primärseitig angeordneten Frequenzgenerator, insbesondere Hochfrequenzgenerator, zum Erzeugen einer Wechselspannung mit vorgegebener Frequenz, einer sekundärseitig angeordneten Gleichrichtereinheit für eine sekundärseitigen Versorgungsspannung bzw. einen sekundärseitigen Versorgungsstrom sowie einer ersten und einer zweiten Potentialtrennung, von welche zwischen Primärseite und Sekundärseite angeordnet sind. Über die erste Potentialtrennung ist die vom Frequenzgenerator erzeugte Wechselspannung von der Primär- und die Sekundärseite übertragbar. Dabei ist die erste Potentialtrennung primärseitig über eine Impedanz mit dem Frequenzgenerator verbunden. Die zweite Potentialtrennung ist hochfrequenzmäßig mit einem Bezugspotential des Frequenzgenerators primärseitig gekoppelt. Weiterhin ist ein Spannungsabfall an der Impedanz für eine Auswertung der sekundärseitigen Versorgungsspannung heranziehbar.

Der Hauptaspekt der erfindungsgemäß vorgeschlagenen Lösung besteht darin, eine Hilfsversorgung für die Sekundärseite des Schaltnetzteils zu generieren, wobei die erste Potentialtrennung für eine Übertragung der vom Frequenzgenerator erzeugten Wechselspannung verwendet wird. Diese Wechselspannung wird vom primärseitig angeordneten Frequenzgenerator erzeugt und kann beispielsweise recheck-, dreieck- oder sinusförmig sein. Sekundärseitig wird die Wechselspannung bzw. der Wechselstrom dann mittels der sekundärseitig angeordneten Gleichrichtereinheit abgegriffen und z.B. für eine Versorgung von sekundärseitig angeordneten Einheiten wie z.B. Steuerelektronik, Kontrollleuchten, etc. herangezogen werden.

Weiterhin kann die zwischen Frequenzgenerator und erster Potentialtrennung angebrachte Impedanz für eine Übertragung von Informationen bzw. Signalen von der Sekundärseite auf die Primärseite der Stromversorgung genutzt werden. Wird der sekundärseitig Ausgang der Hilfsversorgung belastet - z.B. mit einem hochohmigen Widerstand (z.B. 8 kOhm), so ändert sich die sekundäre Versorgungsspannung am Ausgang der Hilfsversorgung. Dies hat auch Auswirkungen auf die Wechselspannung auf der Primärseite - z.B. am Eingang der ersten Potentialtrennung. Durch die Veränderung der Wechselspannung primärseitig kann eine Veränderung der sekundären Versorgungsspannung festgestellt und entsprechend mit Hilfe des Spannungsabfalls an der primärseitigen Impedanz ausgewertet werden.

Mittels der zweiten Potentialtrennung ist ein Bezugspotential der Sekundärseite möglichst niederohmig mit der Primärseite gekoppelt. Die erfindungsgemäße Hilfsversorgung ist damit deutlich unempfindlicher gegenüber Störungen - insbesondere Störungen durch Hochfrequenzschwankungen zwischen der Primärund Sekundärseite. Für die Auswertung von Signalen bzw. Informationen, welche von der Sekundärseite auf die Primärseite übertragen werden, ist damit weder eine Filterung mittels Kondensatoren, welche zu Ungenauigkeiten führt, noch ein aufwendiges und teures Messgerät notwendig. Da bei der erfindungsgemäßen Hilfsversorgung nur eine Potentialtrennung zur Übertragung verwendet wird, ist die erfindungsgemäße Schaltung auch relativ einfach und kostengünstig realisierbar.

Es ist weiterhin vorteilhaft, wenn der zweiten Potentialtrennung primärseitig für eine Kopplung mit dem Bezugspotential des Frequenzgenerators eine Impedanz vorgeschaltet ist. Diese Impedanz kann auch als Kurzschluss -d.h. als Widerstand mit 0 Ohm - ausgeführt sein. Allerdings kann eine niederohmige Impedanz (z.B. 100 Ohm), welche primärseitig mit der zweiten Potentialtrennung in Serie angeordnet ist, als Schutzwiderstand gegen z.B. hohe Spannungsimpulse von der Primärseite auf die Sekundärseite dienen.

Eine zweckmäßige Ausgestaltung der erfindungsgemäßen Hilfsversorgung sieht vor, dass primärseitig einen Auswerteeinheit angeordnet ist, mit welcher die sekundärseitige Versorgungsspannung ausgewertet werden kann. Von der Auswerteeinheit wird für eine Auswertung die Veränderung der primärseitigen Wechselspannung bzw. der Spannungsabfall an der Impedanz herangezogen, über welche die erste Potentialtrennung mit dem Frequenzgenerator verbunden ist. Aus dem Spannungsabfall kann beispielsweise bei bekannter Impedanz auf der Primärseite ein Widerstand am Ausgang der Hilfsversorgung abgeleitet werden. Die Auswertung kann dabei z.B. analog oder digital erfolgen und das entsprechende Auswerteergebnis dann entsprechend weiterverarbeitet werden - z.B. als Signal für eine Steuereinheit, etc. Auf diese einfache Weise kann durch ein passives Signal auf der Sekundärseite - wie z.B. einem Öffnen und Schließen eines Kontaktes, welcher am Ausgang der erfindungsgemäßen Hilfsversorgung angeordnet ist, oder durch eine Veränderung eines Widerstands am Ausgang der erfindungsgemäßen Hilfsversorgung - eine Information auf die Primärseite übertragen werden. Der Kontakt für das sekundärseitige Signal am Ausgang der Hilfsversorgung ist potentialfrei und kann beispielsweise auf das Massepotential oder ein anderes Bezugspotential gelegt werden. Durch die Gleichrichtereinheit ist es so auch möglich den Kurzschlusskontakt über eine längere Distanz bzw. über eine längere Leitung zu realisieren, da nur Gleichstrom geschaltet werden muss.

Idealerweise sind die erste und die zweite Potentialtrennung mittels Kondensatoren realisiert. Die Energie wird damit von der Primärseite auf die Sekundärseite kapazitiv übertragen. Weiterhin bietet der Einsatz vor Kondensatoren den Vorteil, dass Standardbauteile eingesetzt werden können und die Hilfsversorgung in kompakter Bauform und kostengünstig realisierbar ist. Aus Sicherheitsgründen sind die Kondensatoren, mit welchen die galvanische Trennungseinheit realisiert ist, als so genannte Y1-Kondensatoren ausgeführt.

Eine bevorzugte Weiterbildung der erfindungsgemäßen Hilfsversorgung sieht vor, dass ein Kapazitätswert der als Potentialtrennung eingesetzten Kondensatoren aus einem Kapazitätsbereich wählbar ist. Dabei ist eine obere Grenze dieses Kapazitätsbereichs durch einen Ableitstrom für Personenschutz bei einer Frequenz von 50 und/oder 60 Hertz vorgegeben. Eine untere Grenze des Kapazitätsbereichs ist aus einem zu übertragenden Strom bei der durch den Frequenzgenerator vorgegebenen Frequenz ableitbar. Es können beispielsweise für die beiden als Potentialtrennung verwendeten Kondensatoren gleich große Kapazitätswerte gewählt werden. Alternativ kann z.B. auch für die zweite Potentialtrennung ein Kondensator mit einem größeren Kapazitätswert als der Kapazitätswert des als erste Potentialtrennung genutzten Kondensators verwendet werden. Die obere Grenze für eine Auswahl der zur Potentialtrennungen verwendeten Kondensatoren bzw. deren Kapazitätswerten ist aus Sicherheitsgründen durch den Ableitstrom für Personenschutz bzw. den so genannten Berührstrom (= derjenige Strom, der durch den Körper eines Menschen fließt, wenn dieser eine elektrische Einrichtung oder ein elektrisches Betriebsmittel berührt) - bei einer Wechselstromfrequenz von 50 und/oder 60 Hertz gegeben, für welchen beispielsweise aus Personenschutzgründen bzw. zur Verhinderung von Stromunfällen Grenzwerte durch entsprechende internationale und/oder nationale Sicherheitsnormen vorgegeben sind.

Weiterhin ist es von Vorteil, wenn für die Impedanz, über welche die erste Potentialtrennung primärseitig mit dem Frequenzgenerator verbunden ist, ein hochohmiger Widerstand einsetzbar ist. Idealerweise wird eine Impedanz bzw. ein Widerstand im Kilo-Ohm-Bereich verwendet. Die weitere Impedanz, welche für die Kopplung der zweiten Potentialtrennung mit dem Bezugspotential des Frequenzgenerators primärseitig vorgesehen sein kann, kann idealerweise niederohmig ausgeführt sein und z.B. im einem Bereich von 100 Ohm liegen.

### Kurzbeschreibung der Zeichnung

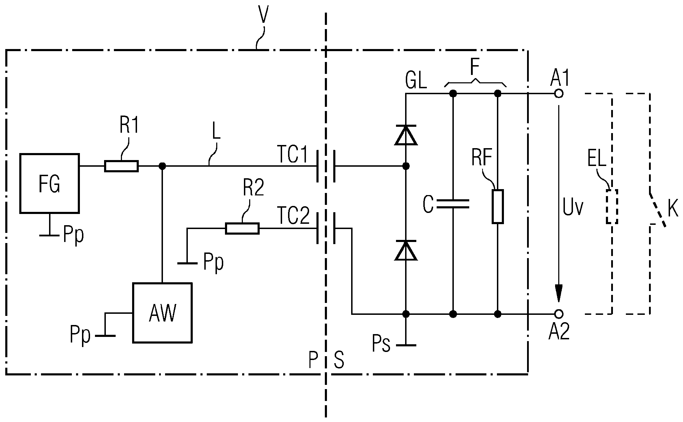

Die Erfindung wird nachfolgend in beispielhafter Weise anhand der beigefügten Figur 1 erläutert. Die Figur 1 zeigt dabei schematisch und beispielhaft eine einfache Ausführung der erfindungsgemäßen Hilfsversorgung für eine Sekundärseite einer Stromversorgung.

### Ausführung der Erfindung

Figur 1 zeigt schematisch eine beispielhafte Ausführungsform einer Hilfsversorgung V, welche in einer Stromversorgung einsetzbar ist. Aus Gründen der besseren Übersichtlichkeit ist die Stromversorgung selbst in der Figur 1 nicht dargestellt. Die Stromversorgung umfasst zumindest einen Transformator oder eine Wandlerschaltung mit einem Transformator. Durch den Transformator wird eine galvanische Trennung zwischen einer Primärseite P und einer Sekundärseite S hergestellt. Dabei befindet sich auf der Primärseite P der Stromversorgung üblicherweise eine Anbindung an eine Stromquelle oder ein Stromnetz. An der Sekundärseite S der Stromversorgung wird eine Ausgangsspannung zum Anschließen einer Last bzw. eines Verbrauchers geliefert.

Für eine vom Betriebszustand der Stromversorgung unabhängige Spannungsversorgung von auf der Sekundärseite S der Stromversorgung ist eine Hilfsversorgung V vorgesehen. Von der Hilfsversorgung V wird an einem Ausgang A1, A2 sekundärseitig ein Versorgungsstrom und/oder eine Versorgungsspannung Uv zur Verfügung gestellt. Dieser Versorgungstrom bzw. diese Versorgungsspannung Uv kann beispielsweise für sekundärseitig angeordnete Einheiten EL (z.B. sekundärseitige Steuerelektronik, Kontrollleuchten, Anzeigen, etc.) genutzt werden. Weiterhin kann mit der erfindungsgemäßen Hilfsversorgung V auch die sekundärseitige Versorgungsspannung Uv bzw. eine sekundärseitige Belastung am Ausgang A1, A2 der Hilfsversorgung V ausgewertet werden. Es kann beispielsweise am Ausgang A1, A2 der Hilfsversorgung V ein Kontakt K oder eine Bürde bzw. ein Belastungswiderstand vorgesehen sein, über welchen der Ausgang A1, A2 der Hilfsversorgung V schließbar ist.

Auf der Primärseite P, welche der Primärseite P der Stromversorgung entspricht (d.h. diese Seite der Hilfsversorgung V ist an die jeweilige Stromquelle bzw. an das Stromnetz angebunden ist), weist die Hilfsversorgung V einen Frequenzgenerator FG auf, von welchem eine Wechselspannung mit einer vorgegebenen Frequenz erzeugt wird. Der Frequenzgenerator FG kann insbesondere als Hochfrequenzgenerator ausgeführt sein, um eine Wechselspannung in einem hohen kHz- bzw. im MHz-Bereich zu generieren. Die Wechselspannung kann dabei rechtecks-, dreiecks- oder sinusförmig sein. Die vom Frequenzgenerator FG erzeugte Wechselspannung ist über eine zwischen Primärseite P und Sekundärseite S angeordnete erste Potentialtrennung TC1 übertragbar. Die erste Potentialtrennung TC1 ist primärseitig über eine Impedanz R1 mit dem Frequenzgenerator FG verbunden. Die Impedanz R1 kann beispielsweise als hochohmiger Widerstand (z.B. Widerstand im kOhm-Bereich) ausgeführt sein. Die Frequenz des Frequenzgenerators FG ist z.B. derart einstellbar, dass die erste Potentialtrennung TC1 ein Impedanzminimum aufweist.

Weiterhin weist die erfindungsgemäße Hilfsversorgung V einen zweite Potentialtrennung TC2 auf, welche wie die erste Potentialtrennung TC1 zwischen Primärseite P und Sekundärseite S der Hilfsversorgung V angeordnet ist. Die zweite Potentialtrennung TC2 ist hochfrequenzmäßig mit einem primärseitigen Bezugspotential Pp des Frequenzgenerators FG gekoppelt und verbindet ein sekundärseitiges Bezugspotential Ps mit der Primärseite P der Hilfsversorgung V. Dazu kann beispielsweise der zweite Potentialtrennung TC2 über eine niederohmige Impedanz R2 (z.B. mit einem Widerstandswert von ca. 100 Ohm) oder mittels Kurzschluss (d.h. direkt bzw. mit einer Impedanz R2 von 0 Ohm) mit dem Bezugspotential Pp des Frequenzgenerators FG gekoppelt sein.

Durch die erste und zweite Potentialtrennung ist die Primärseite P der Hilfsversorgung V von einer Sekundärseite S der Hilfsversorgung V, welche der Sekundärseite bzw. der Ausgangsseite der Stromversorgung entspricht, getrennt. Die erste und zweite Potentialtrennung TC1, TC2 stellen ein galvanische Trennung dar und sind als Kondensatoren TC1, TC2 ausgeführt. Die Kapazitätswerte der Kondensatoren TC1, TC2 sind aus einem Kapazitätsbereich wählbar, dessen obere Grenze aus Sicherheitsgründen durch einen Ableitstrom für Personenschutz bei einer Frequenz von 50 Hertz und/oder 60 Hertz vorgegeben ist. Die untere Grenze des Kapazitätsbereichs ist aus einem zu übertragenden Strom bei der durch den Frequenzgenerator (FG) vorgegebenen Frequenz ableitbar. Die Kapazitäten der beiden Kondensatoren TC1, TC2 können beispielsweise gleich groß gewählt werden oder die Kapazität für die zweiten Potentialtrennung TC2 wird ein größerer Wert gewählt als für die Kapazität der ersten Potentialtrennung TC1.

Weiterhin sind aus Sicherheitsgründen (z.B. damit der Kontakt K am Ausgang A1, A2 von einem Nutzer sicher geöffnet bzw. geschlossen werden kann) die die Kondensatoren TC1, TC2 beispielsweise als so genannte Y1-Kondensatoren ausgeführt. Y1-Kondensatoren weisen (beispielsweise nach der entsprechenden IEC-Norm) eine verstärkte Isolierung bzw. eine überprüfbare erhöhte elektrische und mechanische Sicherheit auf und dürfen daher zwischen der Primärseite P, welche mit einer Stromquelle oder dem Stromnetz verbunden ist, und der Sekundärseite S eingesetzt werden.

Sekundärseitig ist die erste Potentialtrennung TC1 mit einer Gleichrichtereinheit GL - beispielsweise bestehend auf zwei Dioden - verbunden. Mit Hilfe der Gleichrichtereinheit GL wird sekundärseitig ein Versorgungsstrom bzw. eine Versorgungsspannung Uv zur Verfügung gestellt. Die Versorgungsspannung Uv kann beispielsweise auf der Sekundärseite S der Stromversorgung bzw. der Hilfsversorgung V am Ausgang der Gleichrichtereinheit GL an Anschlüssen A1, A2 abgegriffen werden. Die an den Anschlüssen A1, A2 abgreifbare Versorgungsspannung Uv ist vom jeweiligen Betriebszustand des Schaltnetzteils unabhängig.

An diese Anschlüsse A1, A2 kann z.B. eine sekundärseitige Einrichtung EL (z.B. eine Steuerlogik, eine Kontrollleuchte, etc.) angeschlossen werden. Alternativ können die Anschlüsse A1, A2 mittels des Kontakts K kurzgeschlossen oder mit einer Bürde bzw. einem Belastungswiderstand belastet werden. Die Anschlüsse A1, A2 sind dabei potentialfrei - d.h. sie können auf ein beliebiges, sekundärseitiges Bezugspotential Ps gelegt werden. Mit diesem sekundärseitigen Bezugspotential Ps ist die zweite Potentialtrennung TC2 sekundärseitig verbunden, wodurch über die zweite Potentialtrennung TC2 die Primärseite P niederohmig kapazitiv mit dem sekundärseitigen Bezugspotential Ps gekoppelt wird.

Optional kann auf der Sekundärseite S der Hilfsversorgung V noch eine Filterung F vorgesehen sein, welche z.B. aus einem Kondensator C und einem Widerstand RF besteht. Die Filterung F ist dabei ausgangsseitig an die Gleichrichtereinheit GL angebracht, um beispielsweise die mittels der Gleichrichtereinheit GL erzeugte Versorgungsspannung Uv zu glätten.

Für die Auswertung der sekundärseitigen Versorgungsspannung Uv bzw. der sekundärseitigen Belastung am Ausgang A1, A2 der Hilfsversorgung V ist auf der Primärseite P ein Spannungsabfall an der zwischen erster Potentialtrennung TC1 und Frequenzgenerator FG angeordnete Impedanz R1 heranziehbar. Weiterhin umfasst die Hilfsversorgung V auf der Primärseite P eine Auswerteeinheit AW, welche an eine Verbindung L zwischen erster Potentialtrennung TC1 und dem Frequenzgenerator FG bzw. der Impedanz R1 angebunden ist.

Um auf der Sekundärseite S einen Versorgungsstrom bzw. eine Versorgungsspannung Uv zu generieren, wird vom Frequenzgenerator FG eine Wechselspannung mit einer vorgegebenen Frequenz erzeugt. Üblicherweise wird eine Wechselspannung mit hoher Frequenz (z.B. 100kHz, 1MHz, etc.) generiert. Die vom Frequenzgenerator FG erzeugte Wechselspannung wird von der ersten Potentialtrennung TC1 auf die Sekundärseite S übertragen und kann mittels der Gleichrichtereinheit GL abgegriffen werden. Wird der Ausgang A1, A2 der Hilfsversorgung V bzw. der Gleichrichtereinheit GL nun z.B. mit einer Einrichtung EL oder einem Belastungswiderstand belastet oder über einen Kontakt K geschlossen, so verändert sich auch auf der Primärseite P die Wechselspannung bzw. der Spannungsabfall an der zwischen Frequenzgenerator FG und erster Potentialtrennung TC angeordneten Impedanz R1 entsprechend. Diese Veränderung kann mittels der Auswerteeinheit AW detektiert und ausgewertet werden.

Die Auswertung des primärseitigen Spannungsabfalls bzw. ein Ableiten der Belastung am Ausgang A1, A2 der Hilfsversorgung V können entweder analog oder digital erfolgen. Die mit der Auswerteeinheit AW ermittelten Ergebnisse können dann entsprechend weiterverarbeitet werden. Auf diese Weise kann ein passives Signal auf der Sekundärseite S - wie z.B. ein Öffnen und/oder Schließen des Kontakts K am Ausgang A1, A2 der Hilfsversorgung V oder eine Veränderung des Widerstands EL am Ausgang A1, A2 der Hilfsversorgung V - als Information auf die Primärseite P der Hilfsversorgung V übertragen werden.

Bei Verwendung eines Kontakts K für ein sekundärseitiges Signal am Ausgang A1, A2 der Hilfsversorgung HV ist dieser Kontakt K potentialfrei und kann beispielsweise auf das sekundärseitige Bezugspotential Ps gelegt werden. Die von der Sekundärseite S auf die Primärseite P übertragene Information (z.B. Öffnen und/oder Schließen des Kontakts K) kann beispielsweise zum Ein- und Ausschalten der Stromversorgung genutzt werden.

## Patentansprüche

1. Hilfsversorgung für eine Stromversorgung mit zumindest einem Transformator mit einer Primärseite (P) und einer Sekundärseite (S), wobei die Hilfsversorgung (V) eine vom Betriebszustand der Stromversorgung unabhängige Spannungsversorgung (Uv) auf der Sekundärseite (S) der Stromversorgung zur Verfügung stellt, die Hilfsversorgung (V) bestehend aus:
- einem primärseitig angeordneten Frequenzgenerator (FG) zum Erzeugen einer Wechselspannung mit vorgegebener Frequenz;
- einer sekundärseitig angeordneten Gleichrichtereinheit (GL) für eine sekundärseitigen Versorgungsspannung (Uv); sowie
- einer ersten und einer zweiten Potentialtrennung (TC1, TC2), welche zwischen Primärseite (P) und Sekundärseite (S) angeordnet sind;
***dadurch gekennzeichnet, dass*** die erste Potentialtrennung (TC1), über welche die vom Frequenzgenerator (FG) erzeugte Wechselspannung übertragbar ist, primärseitig über eine Impedanz (R1) mit dem Frequenzgenerator (FG) verbunden ist, dass die zweite Potentialtrennung (TC2) hochfrequenzmäßig mit einem dem Frequenzgenerator (FG) zugeordneten Bezugspotential (Pp) primärseitig und mit einem der sekundärseitigen Versorgungsspannung zugeordneten Bezugspotential (Ps) sekundärseitig gekoppelt ist, und dass ein Spannungsabfall an der Impedanz (R1) für eine Auswertung der sekundärseitigen Versorgungsspannung (Uv) heranziehbar ist.

2. Hilfsversorgung nach Anspruch 1, ***dadurch gekennzeichnet, dass*** der zweiten Potentialtrennung (TC2) primärseitig eine Impedanz (R2) für eine Kopplung mit dem Bezugspotential des Frequenzgenerators (FG) vorgeschaltet ist.

3. Hilfsversorgung nach einem der Ansprüche 1 bis 2, ***dadurch gekennzeichnet, dass*** die Hilfsversorgung (V) weiterhin primärseitig eine Auswerteeinheit (AW) zum Auswerten der sekundärseitigen Versorgungsspannung (Uv) aufweist.

4. Hilfsversorgung nach einem der Ansprüche 1 bis 3, ***dadurch gekennzeichnet, dass*** die erste und die zweite Potentialtrennung (TC1, TC2) mittels Kondensatoren realisiert sind.

5. Hilfsversorgung nach Anspruch 4, ***dadurch gekennzeichnet, dass*** die Kondensatoren (TC1, TC2) als so genannte Y1-Kondensatoren ausgeführt sind.

6. Hilfsversorgung nach Anspruch 4 oder 5, ***dadurch gekennzeichnet, dass*** ein Kapazitätswert der Kondensatoren (TC1, TC2) aus einem Kapazitätsbereich wählbar ist, wobei eine obere Grenze des Kapazitätsbereichs durch einen Ableitstrom für Personenschutz bei einer Frequenz von 50 Hertz und/oder 60 Hertz vorgegeben ist und eine untere Grenze des Kapazitätsbereichs aus einem zu übertragenden Strom bei der durch den Frequenzgenerator (FG) vorgegebenen Frequenz ableitbar ist.

7. Hilfsversorgung nach einem der vorangegangenen Ansprüche, ***dadurch gekennzeichnet, dass*** für die Impedanz (R1), über welche die erste Potentialtrennung (TC1) primärseitig mit dem Frequenzgenerator (FG) verbunden ist, ein hochohmiger Widerstand, insbesondere ein Widerstand im Kilo-Ohm-Bereich, einsetzbar ist.

## Claims

1. Auxiliary supply for a current supply with at least one transformer with a primary side (P) and a secondary side (S), wherein the auxiliary supply (V) provides a voltage supply (Uv) that is independent of the operating state of the current supply on the secondary side (S) of the current supply, the auxiliary supply (V) consisting of:
- a frequency generator (FG) arranged on the primary side for generating an alternating voltage with a predetermined frequency;
- a rectifier unit arranged on the secondary side (GL) for a secondary-side supply voltage (Uv); and
- a first and a second potential separation unit (TC1, TC2) arranged between the primary side (P) and the secondary side (S);
***characterised in that*** the first potential separation unit (TC1), via which the alternating voltage generated by the frequency generator (FG) can be transmitted, is connected to the frequency generator (FG) on the primary side via an impedance (R1), that the second potential separation unit (TC2) has a high-frequency coupling to a reference potential (Pp) assigned to the frequency generator (FG) on the primary side and a high-frequency coupling to a reference potential (Ps) assigned to the secondary-side supply voltage on the second side, and that a voltage drop at the impedance (R1) can be used for an evaluation of the secondary-side supply voltage (Uv).

2. Auxiliary supply according to claim 1, ***characterised in that*** an impedance (R2) for a coupling to the reference potential of the frequency generator (FG) is connected upstream of the second potential separation unit (TC2) on the primary side.

3. Auxiliary supply according to one of claims 1 to 2, ***characterised in that,*** on the primary side, the auxiliary supply (V) further comprises an evaluation unit (AW) for evaluating the secondary-side supply voltage (Uv).

4. Auxiliary supply according to one of claims 1 to 3, ***characterised in that*** the first and the second potential separation unit (TC1, TC2) are implemented by means of capacitors.

5. Auxiliary supply according to claim 4, ***characterised in that*** the capacitors (TC1, TC2) are embodied as so-called Y1 capacitors.

6. Auxiliary supply according to claim 4 or 5, ***characterised in that*** a capacitance value of the capacitors (TC1, TC2) can be selected from a capacitance range, wherein an upper limit of the capacitance range is predetermined by a discharge current for personal protection at a frequency of 50 hertz and/or 60 hertz and a lower limit of the capacitance range can be derived from a current to be transmitted at the frequency predetermined by the frequency generator (FG).

7. Auxiliary supply according to one of the preceding claims, ***characterised in that*** a high-ohmic resistance, in particular a resistance in the kiloohm range, can be used for the impedance (R1) via which the first potential separation unit (TC1) is connected on the primary side to the frequency generator (FG).

## Revendications

1. Alimentation auxiliaire destinée à une alimentation en courant électrique qui comprend au moins un transformateur qui possède un côté primaire (P) et un côté secondaire (S) ; dans laquelle l'alimentation auxiliaire (V) met à disposition une source de tension (Uv), indépendante de l'état d'exploitation de l'alimentation en courant électrique, du côté secondaire de l'alimentation en courant électrique, l'alimentation auxiliaire (V) étant constituée par :
- un générateur de fréquence (FG) disposé du côté primaire, destiné à générer une tension alternative avec une fréquence prédéfinie ;
- une unité faisant office de redresseur (GL), disposée du côté secondaire, destinée à une source d'alimentation (Uv) du côté secondaire ; de même que
- une première et une deuxième séparation de potentiel (TC1, TC2), qui sont disposées entre le côté primaire (P) et le côté secondaire (S) ;
**caractérisée en ce que** la première séparation de potentiel (TC1), par l'intermédiaire de laquelle la tension alternative qui a été générée par le générateur de fréquence (FG) peut être transmise, est reliée, du côté primaire, par l'intermédiaire d'une impédance (R1), au générateur de fréquence (FG) ; **en ce que** la deuxième séparation de potentiel (TC2) est couplée, du côté primaire, en haute fréquence, à un potentiel de référence (Pp) qui est attribué au générateur de fréquence (FG), et du côté secondaire, à un potentiel de référence (Ps) qui est attribué à la source de tension du côté secondaire ; et **en ce qu'**une chute de tension à l'impédance (R1) peut être prise en compte pour une évaluation de la source d'alimentation (Uv) du côté secondaire.

2. Alimentation auxiliaire selon la revendication 1, **caractérisée en ce que**, du côté primaire, une impédance (R2) destinée à un couplage avec le potentiel de référence du générateur de fréquence (FG) est montée en amont de la deuxième séparation de potentiel (TC2).

3. Alimentation auxiliaire selon l'une quelconque des revendications 1 à 2, **caractérisée en ce que** l'alimentation auxiliaire (V) présente en outre, du côté primaire, une unité d'évaluation (AW) qui est destinée à l'évaluation de la source de tension (Uv) du côté secondaire.

4. Alimentation auxiliaire selon l'une quelconque des revendications 1 à 3, **caractérisée en ce que** la première et la deuxième séparation de potentiel (TC1, TC2) sont réalisées au moyen de condensateurs.

5. Alimentation auxiliaire selon la revendication 4, **caractérisée en ce que** les condensateurs (TC1, TC2) sont réalisés sous la forme de ce qu'il est convenu d'appeler des condensateurs Y1.

6. Alimentation auxiliaire selon la revendication 4 ou 5, **caractérisée en ce qu'**une valeur de capacité des condensateurs (TC1, TC2) peut être sélectionnée à partir d'un domaine de capacité ; dans lequel on détermine au préalable une limite supérieure du domaine de capacité par l'intermédiaire d'un courant de fuite pour la protection de personnes à une fréquence de 50 Hz et/ou de 60 Hz et une limite inférieure du domaine de capacité peut être déduite d'un courant qui doit être transmis à la fréquence prédéfinie par le générateur de fréquence (FG).

7. Alimentation auxiliaire selon l'une quelconque des revendications précédentes, **caractérisée en ce que**, pour l'impédance (R1), par l'intermédiaire de laquelle la première séparation de potentiel (TC1) est reliée, du côté primaire, au générateur de fréquence (FG), on peut mettre en œuvre une résistance à haute impédance, en particulier une résistance dans le domaine des kilo-Ohms.
